# EUROPÄISCHE PATENTSCHRIFT

(11) **EP 2 057 888 B1**
(45) Veröffentlichungstag und Bekanntmachung des Hinweises auf die Patenterteilung: **24.08.2011**
(21) Anmeldenummer: 08019530.8
(22) Anmeldetag: 07.11.2008
(51) Int. Cl.: A01D 75/18, A01D 75/20

(54) **Landmaschine**
Agricultural machine
Machine agricole

(30) Priorität: 09.11.2007 DE 102007053577
(43) Veröffentlichungstag der Anmeldung: 13.05.2009
(73) Patentinhaber: Alois Pöttinger Maschinenfabrik Ges. m.b.H., 4710 Grieskirchen (AT)
(72) Erfinder: Pöttinger, Klaus, 4710 Grieskirchen (AT)
(74) Vertreter: Thoma, Michael

(56) Entgegenhaltungen:
- EP-A- 0 734 919
- EP-A- 1 400 162
- EP-A- 1 561 649
- DE-A1- 2 948 664
- DE-A1- 3 907 960
- DE-A1- 10 346 818
- DE-U1- 29 517 431
- GB-A- 2 206 662
- RU-C2- 2 266 835

## Beschreibung

Die vorliegende Erfindung betrifft Landmaschine in Form eines an einen Schlepper anbaubaren Grünland- und/oder Bodenbearbeitungsgeräts wie beispielsweise Heuwerbungs- oder Mähmaschine, Ladewagen, Scheibenegge oder Sämaschine, mit einer Sicherheits- und/oder Schnellschaltvorrichtung zum Anheben, Wegbewegen, Stoppen, Bremsen, Abkuppeln und/oder Freischalten eines sicherheits- und/oder kollisionsrelevanten Maschinenteils und/oder zur Verhinderung einer Überlastung, wobei die Sicherheits- und/oder Schnellschaltvorrichtung zumindest einen Aktor zur Beaufschlagung des genannten Maschinenteils aufweist, der einen Sonder-Energiespeicher mit einer im Arbeitsbetrieb der Landmaschine geschlossenen Rückhaltevorrichtung aufweist wobei die Sicherheits- und/oder Schnellschaltvorrichtung einen Notfallauslöser zum automatischen Öffnen der Rückhaltevorrichtung bei Auftreten eines Notfalls und/oder einer anderen eine Schnellschaltung benötigenden Sondersituation aufweist.

Bei Landmaschinen in Form von Grünland- oder Bodenbearbeitungsgeräten treten diverse Situationen auf, in denen besondere Stellbewegungen diverser Maschinenteile bzw. -elemente zu bewerkstelligen sind. Hierbei nehmen Kollisionen der jeweiligen Landmaschine und ihrer Arbeitswerkzeuge mit Hindernissen am oder über dem Boden sowie Kollisionen mit in den Arbeitsbereich gelangenden Personen oder Tieren besonderen Raum ein. Moderne Landmaschinen fahren mit beträchtlicher Geschwindigkeit über die zu bearbeitenden Flächen, so dass ein Auftreffen der Arbeitswerkzeuge auf am Boden liegende Hindernisse wie beispielsweise Steine, Baumstümpfe oder Dergleichen beträchtlichen Schaden am Gerät anrichten können. Hierbei ist es aufgrund der höher werdenden Fahrgeschwindigkeiten zunehmend schwierig, die kollisionsgefährdeten Bauteile rechtzeitig anzuheben bzw. wegzubewegen, um eine Kollision zu vermeiden. Insofern besteht ein Bestreben darin, den zu bearbeitenden Boden immer weiter vorausschauend zu überwachen, beispielsweise mittels berührungsloser Sensoren, um rechtzeitig reagieren zu können, beispielsweise die Pickup eines Ladewagens anheben, die Rechkreisel von Heuwerbungsmaschinen hochschwenken oder Mähwerke nach oben fahren zu können. Von der Problematik der Maschinenbeschädigung abgesehen ist vor allen Dingen auch eine Verletzung von in den Arbeitsbereich geratenden Personen oder Tieren zu verhindern, wozu es alternativ oder zusätzlich zu dem Wegfahren bzw. Anheben einzelner Maschinenteile oder des gesamten Geräts oft auch sinnvoll und notwendig ist, die rotierenden oder sich anderweitig bewegenden Arbeitswerkzeuge möglichst schnell zu stoppen, beispielsweise die rotierenden Trommeln eines Mähwerks zu stoppen, um die hiervon ausgehende Verletzungsgefahr möglichst rasch zu eliminieren.

Um dieser facettenreichen Sicherheitsproblematik entgegen zu treten, wurden bereits diverse Sicherheitsvorrichtungen an Landmaschinen vorgeschlagen. Beispielsweise beschreibt die EP 1300065 B1 eine Mähmaschine mit einer Sicherheitsvorrichtung, die beim Auftreffen der Mäheinrichtung auf ein Hindernis ein Nach-hinten-schwenken sowie zusätzlich ein Anheben des Mähbalkens bewirkt. Hierzu ist das Mähwerk an einem Tragbalken schwenkbar gehalten, der selbst derart nachgiebig an einer Dreipunktanbauvorrichtung gelagert ist, dass ein Zurückschwenken des Tragbalkens gleichzeitig ein Nach-oben-kippen der Mäheinrichtung bewirkt. Diese Sicherheitsvorrichtung reagiert allerdings erst bei Auftreffen auf ein Hindernis und damit sozusagen erst, wenn es schon zu spät ist. In ähnlicher Weise ist es aus der DE 10234741 A1 bekannt, bei einer Mähmaschine das Seitenmähwerk um eine vertikale Achse entgegen der Fahrtrichtung verschwenkbar aufzuhängen, so dass das Seitenmähwerk nach hinten schwenken kann, wenn es auf ein Hindernis trifft. Eine Landmaschine anderer Art mit einer Sicherheitsvorrichtung beschreibt die DE 102005005201 A1, die einen Kreiselschwader zeigt, dessen Rechzinkenträger, an denen die um aufrechte Achsen umlaufenden Rechzinken der Rechkreisel befestigt sind, mit einem Gelenk versehen sind, so dass die einzelnen Rechzinken beim Auftreffen auf ein Hindernis wegklappen können. Eine in die Rechzinkenträger integrierte Federeinrichtung sorgt dabei dafür, dass nach einem solchen Wegklappen der weggeklappte Rechzinkenträgerteil wieder in seine Ausgangsstellung zurückgebracht wird, sobald das Hindernis aus dem Kollisionsbereich ist. Um ein Auftreffen auf ein Hindernis erst gar nicht zuzulassen, schlägt die Schrift DE 10346818 A1 eine Mähmaschine vor, bei der mittels eines Sensors der vor dem Mähwerk liegende Bereich abgetastet wird, um Hindernisse vorzeitig zu erkennen. Das Mähwerk ist dabei an einem teleskopierbaren Träger aufgehängt, der über Hydraulikzylinder zusammengefahren werden kann, um bei Erfassung eines Hindernisses das Mähwerk aus dem Kollisionsbereich wegzubewegen. Mit zunehmenden Fahrgeschwindigkeiten wird es jedoch schwierig, eine Kollision mit dem Hindernis tatsächlich zu vermeiden. Wird die Bodenabtastung zu weit vorausschauend ausgebildet, sinkt die Genauigkeit der Erkennung selbst bzw. treten Abstimmungsprobleme bei Richtungsänderungen oder Geschwindigkeitsänderungen auf. Wird indes die Hinderniserkennung nur knapp vor dem Gerät vorgenommen, kann der entsprechende Maschinenteil oft nicht mehr schnell genug bewegt werden.

Aus der DE 39 07 960 A1 ist eine Landmaschine wie beispielsweise Kreiselmähwerk, Feldhäcksler oder Maishäcksler bekannt bei dem dem Arbeitsrotor eine Bremsscheibe zugeordnet ist, um unerwünschtes Nachlaufen des Arbeitsrotors zu unterbinden. Die Bremsscheibe wird einerseits mit einem hydraulischen Bremskolben in Eingriff gebracht und andererseits durch eine Wirbelstrombremse beaufschlagt. Aus der RU 22 66 835 C2 ist ein Kraftfahrzeug mit einer Druckluftbremse zum Abbremsen der Räder bekannt, wobei bei Ausfall der Druckluftquelle mehrere Gasgeneratoren aktiviert werden können, um die Bremswirkung erzeugen zu können. Ferner beschreibt die GB 22 06 662 A eine Ballenpresse, bei der der Einlaufbereich des Arbeitsaggregats sensorüberwacht wird, so dass der Antrieb des Arbeitsaggregats stillgelegt werden kann, wenn ein Hindernis in den Einlauf gerät oder im Einlaufbereich mit Körpergliedern hantiert wird.

Hiervon ausgehend liegt der vorliegenden Erfindung die Aufgabe zugrunde, eine verbesserte Landmaschine der genannten Art zu schaffen, die Nachteile des Standes der Technik vermeidet und Letzteren in vorteilhafter Weise weiterbildet. Insbesondere soll eine Landmaschine hinsichtlich ihrer Kollisionssicherheit verbessert werden und ein ausreichend schnelles Ausweichen und/oder Stoppen kollisionsgefährdeter Maschinenteile erreicht werden.

Erfindungsgemäß wird diese Aufgabe durch eine Maschine gemäß Anspruch 1 gelöst. Bevorzugte Ausgestaltungen der Erfindung sind Gegenstand der abhängigen Ansprüche.

Es wird also vorgeschlagen, an der Landmaschine einen für Sonderfälle vorgesehenen Sonder-Energiespeicher vorzusehen, der ein besonders schnelles Bewegen bzw. eine besonders kraftvolle Beaufschlagung eines Maschinenteils ermöglicht, um in der im Einzelfall notwendigen Weise reagieren zu können. Erfindungsgemäß wird vorgeschlagen, dass der Aktor zur Beaufschlagung des Maschinenteils einen Sonder-Energiespeicher mit einer im Arbeitsbetrieb der Landmaschine geschlossenen Rückhaltevorrichtung aufweist, wobei die Sicherheits- und/oder Schnellschaltvorrichtung einen Notfallauslöser zum automatischen Öffnen der Rückhaltevorrichtung bei Auftreten eines Notfalls und/oder einer anderen, eine Schnellschaltung benötigenden Sondersituation aufweist. Der Sonder-Energiespeicher kann hierbei im normalen Betrieb inaktiv bleiben, wobei er gleichwohl jedoch mit einer ausreichend hohen Energiemenge geladen bzw. ausreichend stark vorgespannt ist, um bei Auftreten einer Notfallsituation das Maschinenteil mit ausreichender Geschwindigkeit wegreißen, stoppen, bremsen, abkuppeln oder in anderer geeigneter Weise beaufschlagen zu können, so dass größerer Schaden abgewendet werden kann. Die dem Sonder-Energiespeicher zugeordnete Rückhaltevorrichtung kann hierbei durch den Notfallauslöser, der vorteilhafterweise als Schnellschalter ausgebildet und vorteilhafterweise in Sekundenbruchteilen geöffnet werden kann, schlagartig gelöst werden, so dass die bereitgehaltene Energieladung des Sonder-Energiespeichers impuls- bzw. schlagartig freigesetzt werden kann.

Der Sonder-Energiespeicher kann hierbei auf verschiedene Art und Weise ausgebildet sein, wobei nach einer vorteilhaften Ausführung der Erfindung der Sonder-Energiespeicher mittels einer unter Druck stehenden Flüssigkeit, insbesondere Hydrauliköl, und/oder mechanisch arbeiten kann. In besonders vorteilhafter Weiterbildung der Erfindung kann der Sonder-Energiespeicher einen unter hohem Druck stehenden Flüssigkeits-Hochdruckspeicher, insbesondere einen Hydraulikdruckspeicher aufweisen. Die Flüssigkeitsmenge und der herrschende Druck kann hierbei grundsätzlich variieren und an die im Notfall zu erledigende Aufgabe angepasst sein. Vorteilhafterweise kann der Flüssigkeitsdruckspeicher mit einem Druck von mehr als 50 bar, vorzugsweise mehr als 100 bar und in besonders vorteilhafter Weiterbildung der Erfindung 150 bar bis 500 bar beaufschlagt sein, um auch schwerere und/oder größere Maschinenteile ausreichend schnell wegbewegen zu können.

Alternativ oder zusätzlich kann der Sonder-Energiespeicher auch einen mechanischen Energiespeicher, insbesondere eine vorgespannte Federvorrichtung, umfassen, mittels derer die gewünschte Stellbewegung und/oder der gewünschte Stellimpuls des Aktors erzeugt werden kann.

Alternativ oder zusätzlich zu solchen nicht gasförmigen bzw. nicht mit Gasdruck arbeitenden Sonder-Energiespeichern erfindungsgemäß ein Gasgenerator mit einer Zündpille zur Freisetzung einer in einem Gasdruckspeicher gespeicherten Gasmenge vorgesehen. Der Gasgenerator bildet erfindungsgemäß den Notfall-Auslöser zum Auslösen der genannten Rückhaltevorrichtung

Mittels eines solchen Gasgenerators kann durch Zündung der Zündpille und der hierdurch freigegebenen Gasmenge schlagartig ein beträchtlicher Impuls freigesetzt werden, der es dem Aktor ermöglicht, das sicherheits- bzw. kollisionsrelevante Maschinenteil schlagartig anzuheben, wegzubewegen, zu stoppen, zu bremsen, abzukuppeln, freizuschalten oder in sonstiger Weise zu beaufschlagen, um eine plötzlich auftretende Gefahr zu beseitigen. Ein solcher Gasgenerator ist an sich zum Aufblasen von Airbags in Kraftfahrzeugen bekannt, allerdings wird er gemäß der vorliegenden Erfindung nicht zum Aufblasen eines dem Fahrer zugeordneten Luftsacks verwendet, sondern als Aktor einem Maschinenteil zugeordnet, das durch den Gasdruckstoß in besonderer Weise impuls- bzw. schlagartig beaufschlagt werden kann, um auf eine besondere, insbesondere sicherheitsrelevante Situation reagieren zu können. Durch Zünden der Zündpille wird der dem Gasdruckvolumen zugeordnete Rückhalteverschluss des Gasgenerators sozusagen weggeschossen, so dass sich das gespeicherte, unter hohem Druck stehende Gasdruckvolumen schlagartig entspannen kann und einen entsprechenden Druckimpuls bereitstellt.

Nach einer vorteilhaften Weiterbildung der Erfindung kann hierbei auch eine Kombination der genannten Sonder-Energiespeicher vorgesehen sein. Beispielsweise kann ein Hydraulikdruckspeicher mit einem mechanischen Federspeicher und/oder mit einem Gasgenerator kombiniert werden, so dass die Vorteile der verschiedenen Energiespeicherformen kombiniert werden können, beispielsweise dahingehend, dass für den allerersten, schnellen Energieimpuls der Gasgenerator genutzt wird, während für den darauffolgenden längeren, weiteren Stellweg der Hydraulikdruck und/oder die mechanische Federkraft genutzt wird.

Alternativ oder zusätzlich kann der eine Energiespeicher auch dazu genutzt werden, die Rückhaltevorrichtung des jeweils anderen Energiespeichers zu lösen. Erfindungsgemäß bildet der Gasgenerator den Notfallauslöser der Rückhaltevorrichtung des Hydraulikdruckspeichers und/oder des mechanischen Federspeichers, um so beispielsweise die Rückhaltevorrichtung der anderen Energiespeicher wegzuschießen, so dass diese in der gewünschten Weise rasch ihre Energie freisetzen. Hierbei kann ggf. auch die Funktion als Notfallauslöser mit der Funktion als Aktor kombiniert werden, beispielsweise dahingehend, dass der Gasgenerator einerseits die Rückhaltevorrichtung zumindest eines weiteren Energiespeichers wegschießt und gleichzeitig die weiterhin austretende Gasmenge dazu genutzt wird, selbst den das jeweilige Maschinenteil wegbewegenden Aktor zu beaufschlagen.

Grundsätzlich können hierbei verschiedene Gasgeneratoren zum Einsatz kommen. Beispielsweise können aus Fahrzeugairbags bekannte Gasgeneratoren Verwendung finden, bei denen zur weiteren Erhöhung des Druckimpulses eine Treibladung gezündet wird, die einen zusätzlichen Druckimpuls liefert. Alternativ oder zusätzlich kann die Zündpille auch im Zylinder auslösen und/oder direkt im Volumenstrom ohne Gasgenerator zünden.

In Weiterbildung der Erfindung besitzt die Landmaschine vorteilhafterweise einen Kaltgasgenerator ohne zusätzliche Treibladung, um die durch den Gasaustritt bestehenden Risiken zu vermindern. Zudem erlaubt die Verwendung eines Kaltgasgenerators eine verbesserte Steuerbarkeit des Gasaustritts, wodurch eine definierte Beaufschlagung des jeweiligen Maschinenteils in der gewünschten Weise erreicht werden kann. Der Gasaustritt kann hinsichtlich Menge und Geschwindigkeit präzise gesteuert werden. Mit der Zündpille wird lediglich ein Verschluss des Druckspeichers geöffnet, so dass die unter hohem Druck gespeicherte Gasmenge austreten kann.

Besondere Vorteile ergeben sich, wenn der Sonder-Energiespeicher in Verbindung mit einer Sicherheits- und/oder Schnellschaltvorrichtung eingesetzt wird, die eine Erfassungsvorrichtung zur Erfassung von in einen Kollisionsbereich geratenden Hindernissen sowie eine Steuervorrichtung zur vorzugsweise elektrischen Betätigung des Notfall-Auslösers der Rückhaltevorrichtung in Abhängigkeit der Erfassung eines Hindernisses aufweist. Durch die sehr hohe Geschwindigkeit, mit der der Maschinenteil mittels des Druckimpulses aus dem Sonder-Energiespeicher wegbewegt werden kann, kann die Erfassungsvorrichtung auch bei höheren Fahrgeschwindigkeiten einen recht nahe vor dem Maschinenteil liegenden Bereich überwachen, so dass Fehlerkennungen vermieden und Abstimmungsprobleme zwischen Erfassung und Auslösen der Bewegung beispielsweise bei Kurvenfahrten oder Dergleichen reduziert werden können.

Der Sonder-Energiespeicher kann grundsätzlich in verschiedener Weise eingesetzt werden, um die gewünschte Bewegung des Maschinenteils zu erzeugen. Gemäß einer besonderes vorteilhaften Ausführung der Erfindung kann der Sonder-Energiespeicher mit einem Druckmittelzylinder gekoppelt sein. Die von dem Flüssigkeits-Hochdruckspeicher und/oder einem Gasgenerator nach Öffnen der Rückhaltevorrichtung bereit gestellte Druckmittelmenge wird in eine Druckmittelkammer des Druckmittelzylinders expandiert, der die Druckmittelbeaufschlagung durch den Sonder-Energiespeicher dann in eine entsprechende Stellbewegung umsetzt. Der Druckmittelzylinder ist hierzu in geeigneter Weise mit dem Maschinenteil gekoppelt.

In besonders vorteilhafter Weise kann hierbei der Sonder-Energiespeicher mit einem Druckmittelzylinder gekoppelt sein, der an sich für herkömmliche Stellbewegungen vorgesehen ist und somit eine Doppelfunktion erfüllt. Der Druckmittelzylinder kann hierzu insbesondere mit einem an sich herkömmlichen Druckmittelkreis wie beispielsweise dem Hydraulikkreis des Schleppers gekoppelt sein, um mit Druckfluid aus diesem Druckmittelkreis entsprechende Stellbewegungen zu erzeugen. Zusätzlich wird der Druckmittelzylinder mit einem Flüssigkeits-Hochdruckspeicher und/oder einem Gasgenerator gekoppelt, um bei Auftreten einer entsprechenden Situation durch die explosionsartige Beaufschlagung mit dem Druckimpuls aus dem Gasgenerator eine entsprechende Stellbewegung zu erzeugen.

Alternativ oder zusätzlich kann der Gasgenerator auch dazu genutzt werden, eine aus einem anderen Energiespeicher kommende Energiemenge freizusetzen und/oder eine anderweitig angetriebene Bewegung auszulösen. Insbesondere kann der das Maschinenteil beaufschlagende Aktor eine vorgespannte Federvorrichtung umfassen, die ein Rückhalteelement besitzt, welches mittels des Gasgenerators lösbar ist. Beispielsweise kann ein stark vorgespanntes Federelement beispielsweise in Form eines Tellerfederpakets von einem Rückhalteelement in Form eines Riegels in der vorgespannten Stellung gehalten werden, der von dem Gasgenerator in die geöffnete Stellung geschossen werden kann, so dass sich das Federpaket entspannt bzw. hierbei die gewünschte Bewegung des jeweiligen Maschinenteils bewirkt. Alternativ kann auch ein Rückhalteelement beispielsweise in Form eines Drahtes oder einer Leine zerstört oder geschwächt werden, um ein Auslösen der Federvorrichtung bzw. des Energiespeichers zu erreichen.

Alternativ oder zusätzlich kann der Aktor der Sicherheits- und/oder Schnellschaltvorrichtung auch ein Trennelement zum Durchtrennen eines Antriebsstrangs aufweisen, das von dem Sonder-Energiespeicher ausgelöst werden kann. Beispielsweise kann ein Kupplungsteils und/oder ein Zahnrad abgesprengt werden, um den Antriebsstrang freizuschalten, wobei alternativ oder zusätzlich auch ein Bremselement schlagartig mit dem Antriebsstrang in Eingriff gebracht werden kann, um den Antriebsstrang zu stoppen bzw. zu bremsen.

In besonders vorteilhafter Weiterbildung der Erfindung umfasst die Sicherheits- und/oder Schnellschaltvorrichtung der Landmaschine eine Bewegungsvorrichtung insbesondere in Form einer Hubvorrichtung, mittels derer ein sicherheitsrelevanter und/oder kollisionsgefährdeter Maschinenteil wegbewegt werden kann, wobei die Bewegungsvorrichtung ein in geeigneter Weise ausgebildetes Stellelement umfasst, das mit dem Sonder-Energiespeicher verbindbar bzw. von dem Sonder-Energiespeicher beaufschlagbar ist, um den Druckimpuls des Sonder-Energiespeichers in eine gewünschte Stellbewegung umzusetzen.

Das Stellelement kann vorzugsweise in der zuvor genannten Weise einen Druckmittelzylinder umfassen, der eine mit dem Sonder-Druckgenerator verbindbare Druckmittelkammer besitzt. Der Druckmittelzylinder kann hierbei als Stellzylinder bzw. Hubzylinder zum Anheben des jeweiligen Maschinenteils fungieren, beispielsweise kann der Pickup-Hubzylinder eines Ladewagens mit dem Sonder-Energiespeicher gekoppelt werden, so dass bei Annäherung und/oder Auftreffen auf ein Hindernis die Pickup des Ladewagens schlagartig angehoben werden kann. Alternativ oder zusätzlich kann beispielsweise auch der Hubzylinder eines Kreiselrechens mit dem Sonder-Energiespeicher in der genannten Weise gekoppelt werden, um den Rechkreisel bei Bedarf schlagartig anheben zu können.

Gemäß einer besonders vorteilhaften Ausführung der Erfindung kann die zuvor genannte Bewegungsvorrichtung auch eine Dreipunktaufhängung mit Ober- und Unterlenkern umfassen, von denen zumindest einem der genannte Druckmittelzylinder zugeordnet ist, der in der genannten Weise mit dem Sonder-Energiespeicher gekoppelt ist, um eine schlagartige Bewegung der Dreipunktaufhängung herbeiführen zu können. Insbesondere kann der Druckmittelzylinder der Dreipunktaufhängung dabei derart zugeordnet sein, dass ein Ausheben des an der Dreipunktaufhängung angelenkten Geräts durch den Druckimpuls des Sonder-Energiespeichers bewirkt werden kann. Der Druckmittelzylinder kann hierbei ein separater Stellzylinder sein, der mit einem der Lenker der Aufhängung verbunden ist. Insbesondere jedoch kann auch einer der Lenker selbst, beispielsweise der Oberlenker, als Druckmittelzylinder ausgebildet sein, dem der Sonder-Energiespeicher zugeordnet ist.

Der Druckmittelzylinder der Bewegungsvorrichtung kann dabei in Weiterbildung der Erfindung zusätzlich zu dem Sonder-Energiespeicher auch mit einer vorzugsweise steuerbaren Druckmittelquelle zur mehrmaligen, "normalen" Betätigung der Bewegungsvorrichtung verbunden sein. So kann beispielsweise der Hubzylinder für die Pickup eines Ladewagens in an sich bekannter Weise mit der Schlepperhydraulik verbunden sein, um die Pickup in der gewünschten Weise anheben und absenken zu können. Zusätzlich ist der Gasgenerator angeschlossen, um bei Bedarf ein ruckartiges und/oder ein zusätzliches Betätigen herbeiführen zu können.

Alternativ oder zusätzlich zu den zuvor genannten Ausbildungen der Landmaschine kann der Sonder-Energiespeicher gemäß einem weiteren Aspekt der vorliegenden Erfindung auch dazu genutzt werden, einer Antriebseinrichtung der Landmaschine zusätzliche Bewegungsenergie bereit zu stellen, um bei besonderen Situationen ein Plus an Antriebsenergie zu erzielen. Beispielsweise kann der Sonder-Energiespeicher einem Kratzbodenantrieb zugeordnet sein, um ein zusätzliches Anfahrmoment bereit zu stellen oder bei Auftreten von Verstopfungen ein zusätzliches Antriebsmoment beisteuern zu können. In Weiterbildung der Erfindung kann der Aktor also gleichzeitig sowohl von dem Sonder-Energiespeicher und dem davon bereit gestellten Druckimpuls als auch mit der für die Betätigung des Antriebs an sich vorgesehenen Antriebsenergie beaufschlagt werden. Hierbei können grundsätzlich auch verschiedene Energietypen miteinander kombiniert werden, beispielsweise kann ein Antriebselement über einen Druckmittelzylinder und dem damit verbundenen Flüssigkeits-Hochdruckspeicher mit einer Stellkraft beaufschlagt werden, während andererseits das genannte Antriebselement beispielsweise von einem Elektromotor und einer Getriebestufe her angetrieben wird.

Die Erfindung wird nachfolgend anhand verschiedener Ausführungsbeispiele und zugehöriger Zeichnungen näher erläutert. In den Zeichnungen zeigen:
- Fig. 1:: eine schematische Seitenansicht eines Ladewagens mit einer durch einen Druckmittelzylinder anhebbaren Pickup, wobei dem Druckmittelzylinder gemäß einer vorteilhaften Ausführungsform der Erfindung ein Hydraulik-Hochdruckspeicher mit einer im Normalbetrieb geschlossenen Rückhaltevorrichtung zugeordnet ist,
- Fig. 2:: eine schematische Draufsicht auf eine Mähmaschine mit Front- und Seitenmähwerken, die jeweils mittels Hubvorrichtungen ausgehoben werden können, denen jeweils ein Hydraulik-Hochdruckspeicher mit einer im Normalbetrieb geschlossenen Rückhaltevorrichtung zur Erzeugung eines besonderen Hubimpulses zugeordnet sind,
- Fig. 3:: eine schematische Draufsicht auf einen Kreiselschwader gemäß einer weiteren Ausführung der Erfindung, wobei dem Antriebsstrang der Kreiselrechen ein Hydraulik-Hochdruckspeicher mit einer im Normalbetrieb geschlossenen Rückhaltevorrichtung zum Absprengen eines Getrieberades zugeordnet ist,
- Fig. 4:: eine schematische Draufsicht auf einen Kreiselheuer nach einer weiteren Ausführung der Erfindung,
- Fig. 5:: eine schematische, perspektivische Darstellung eines optional vorsehbaren Gasgenerators der Landmaschinen der vorhergehenden Figuren in einem Halbschnitt, und
- Fig. 6:: einen Längsschnitt durch den Gasgenerator aus Fig. 5.

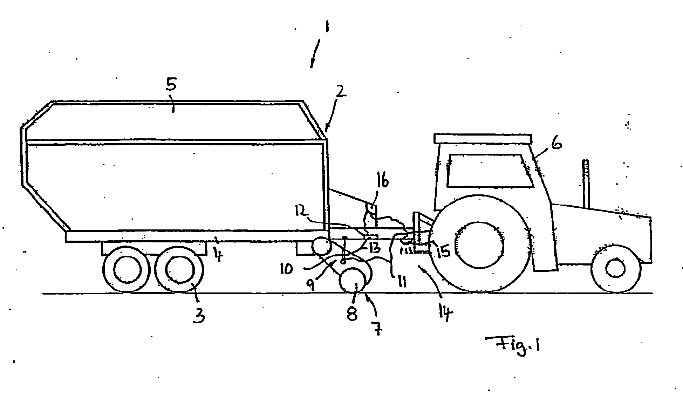

Die in Fig. 1 gezeigte Landmaschine 1 in Form eines Ladewagens umfasst ein Fahrwerk 3, das einen Maschinenrahmen 4 am Boden abstützt, der einen an sich üblichen Ladewagenaufbau 5 mit einem Erntegutspeicherraum trägt. Der Ladewagen 2 ist dabei in an sich bekannter Weise über eine Deichsel an einen Schlepper 6 anbaubar. Zur Aufnahme des Ernteguts vom Boden umfasst der Ladewagen 2 eine Aufnahmevorrichtung 7, die in der gezeichneten Ausführungsform in Form einer Pickup 8 ausgebildet ist, die eine rotierende Stachelwalze umfassen kann, an die ein geeigneter Aufgabeförderer anschließen kann, um das aufgenommene Erntegut in den Erntegutspeicherraum zu fördern.

Die Pickup 8 ist durch eine Hubvorrichtung 9 umfassend zumindest einen Druckmittelzylinder 10 anhebbar und absenkbar ausgebildet, wobei der Druckmittelzylinder 10 über eine Druckmittelleitung 11 von einem Hydraulikkreis betätigbar ist, der am Schlepper 6 vorgesehen sein kann und/oder vom Schlepper 6 her steuerbar ist, so dass die Pickup 8 in an sich bekannter Weise für den Arbeitsbetrieb abgesenkt und für den Transport angehoben werden kann.

Zusätzlich ist der Druckmittelzylinder 10 der Hubvorrichtung 9 für die Pickup 8 von einem Sonder-Energiespeicher 12 beaufschlagbar, um zusätzlich in Notsituationen die Pickup ruckartig nach oben reißen zu können. Der Sonder-Energiespeicher 12 kann in vorteilhafter Weiterbildung der Erfindung entsprechend der gezeichneten Ausführung als ein Flüssigkeits-Hochdruckspeicher vorzugsweise in Form eines Hydraulikdruckspeichers ausgebildet sein, der unter ausreichend hohem Druck vorgespannt ist. Der Flüssigkeits-Hochdruckspeicher ist im normalen Betrieb durch eine Rückhaltevorrichtung inaktiv geschaltet, die jedoch durch einen Schnellauslöser gelöst werden kann, um die Energie des Hochdruckspeichers schlagartig freizusetzen. In Weiterbildung der Erfindung kann optional ein weiterer Sonder-Energiespeicher beispielsweise in Form einer mechanischen Federeinrichtung oder eines Gasgenerators, der nachher noch näher beschrieben wird, zugeschaltet sein.

Der Druckmittelzylinder 10 kann hierzu eine separate Druckmittelkammer aufweisen, in die speziell die von dem Hochdruckspeicher 12 bereit gestellte Druckmittelmenge eingespeist werden kann. Alternativ oder zusätzlich kann die Druckmittelmenge jedoch auch in ein Druckmittelkammer des Druckmittelzylinders 10 expandieren, die an sich auch regulär von dem Druckmittel des "normalen", separaten Druckmittelkreises vom Schlepper 6 her genutzt wird. Der Hochdruckspeicher 12 ist in der gezeichneten Ausführungsform über einen Druckmittelkanal 13 mit dem Zylinder 10 verbunden, ggf. kann dabei der Hochdruckspeicher 12 auch unmittelbar auf dem Zylinder 10 sitzen, um einen kurzen Expansionsweg für das Druckmittel sicherzustellen.

In der gezeichneten Ausführungsform ist der Sonder-Energiespeicher 12 Teil einer umfassenderen Sicherheits- und/oder Schnellschaltvorrichtung 14, die vorteilhafterweise eine Erfassungsvorrichtung 15, beispielsweise in Form eines Bodenabtastsensors, der vorteilhafterweise berührungslos arbeiten und beispielsweise als Ultraschallsensor ausgebildet sein kann, sowie eine Steuervorrichtung 16 zur Ansteuerung des Sonder-Energiespeichers 12 umfasst. Wie Fig. 1 zeigt, ist die Steuervorrichtung 16 mit der Erfassungsvorrichtung 15 verbunden. Sobald Letzere ein Hindernis vor der Pickup 8 entdeckt, das die Pickup 8 beschädigen würde, steuert die Steuervorrichtung 16 den Sonder-Energiespeicher 12 an, um diesen auszulösen und hierdurch die Pickup 8 nach oben zu reißen.

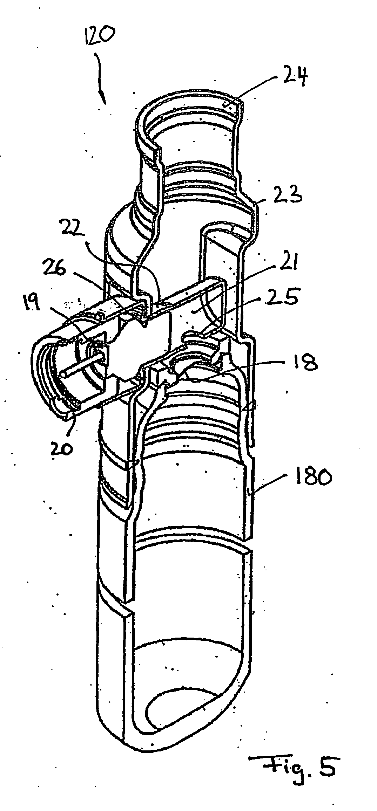

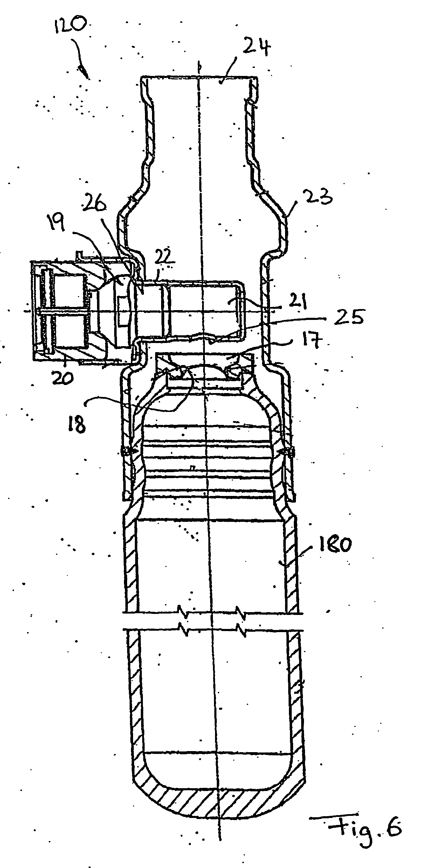

Der Sonder-Energiespeicher umfasst hierbei, ggf. zusätzlich zu einem Hydraulik-Hochdruckspeicher, einen Gasgenerator 120, wie ihn die Fig. 5 und 6 zeigen: Darin gezeigt ist ein Kaltgasgenerator mit einem Öffnungsmechanismus, der ein Abströmen des freigesetzten Gases in axialer Richtung ermöglicht. Im Bereich oberhalb der Ausströmöffnung 17 des Gasdruckbehälters 180 ist der Öffnungsmechanismus angeordnet, der zur Zerstörung eines Dichtelements 18 dient, das als Membran ausgebildet sein kann. Der Öffnungsmechanismus umfasst dabei eine Zündpille 19, eine Zündpillenhalterung 20 sowie eine Düsenkammer 21, die zusammen in einem Zündgehäuse 22 untergebracht sind. Der Gasdruckbehälter 180 ist dabei in axialer Richtung mit einem Außengehäuse 23 verbunden, das am axialen Ende eine zu dem Druckmittelzylinder 10 führende Ausströmöffnung 24 besitzt, vgl. Fig. 5.

Bei der Zündpille 19 handelt es sich um einen an sich bekannten Anzünder, der eine relativ geringe Menge an Zündladung in einem Gehäuse aufweist, in die von außerhalb her elektrisch kontaktierbare Zündpins geführt sind, welche nach Anlegen einer elektrischen Spannung die Zündladung zünden.

In der gezeichneten Ausführungsform ist die genannte Düsenkammer 21 mit einer Austrittsöffnung 25 versehen, die im Wesentlichen unmittelbar über dem Dichtelement 18 angeordnet ist, wobei vorzugsweise der Abstand zwischen dem Dichtelement 18 und der genannten Austrittsöffnung 25 kleiner oder gleich dem Durchmesser der genannten Ausströmöffnung sein kann. Das zuvor genannte Zündgehäuse 22 ragt dabei durch eine radiale Einstecköffnung 26 in das Außengehäuse 23, ohne die gegenüber liegende Innenwand des genannten Außengehäuses zu berühren. Hierdurch bleibt ein ausreichender Ausströmquerschnitt im Außengehäuse 23, um ein rasches Ausströmen des Gases zu ermöglichen.

Um den Druckmittelzylinder 10 schlagartig mit einem Gasdruckimpuls zu beaufschlagen, wird die genannte Zündpille 19 durch Anlegen eines elektrischen Zündimpulses von der Steuervorrichtung 16 her gezündet. Die Energiefreisetzung wird in der Düsenkammer 21 gebündelt und als Heißgasstrahl konzentriert vorzugsweise auf den höchsten Punkt des Dichtelements 18 geleitet, wodurch die Zerstörung des Dichtelements 18 erfolgt und die Ausströmöffnung 17 vollständig freigelegt wird. In vorteilhafter Weiterbildung kann dabei vorgesehen sein, dass das Dichtelement 18 vollständig freiliegt und ohne zusätzliche Abstützung ausgebildet ist. Die Zerstörung des Dichtelements kann durch thermische Schwächung erfolgen, d.h. der Innendruck des Gasdruckbehälters 180 zerstört das thermisch geschwächte Dichtelement 18.

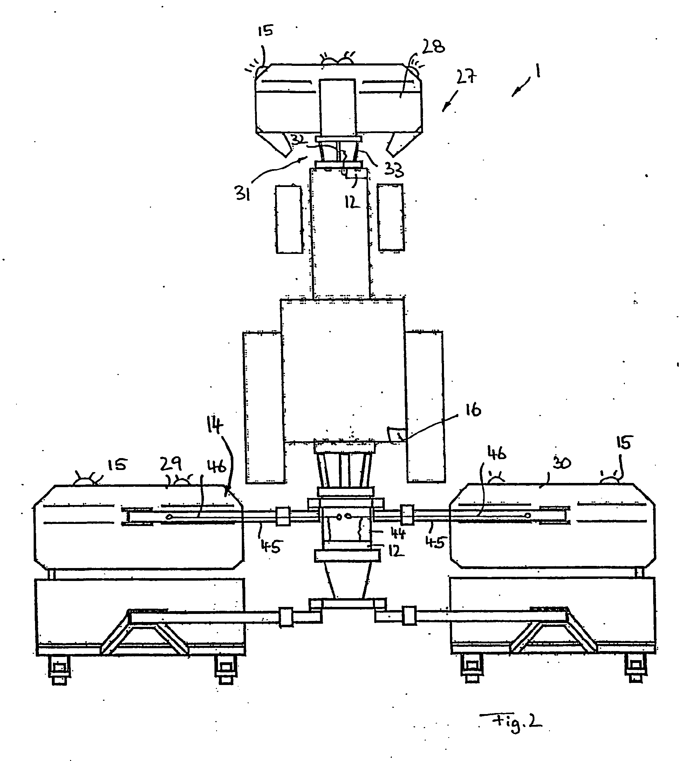

Gemäß einer alternativen Ausführungsform der Erfindung, die Fig. 2 zeigt, kann die Landmaschine 1 auch als Mähmaschine 27 ausgebildet sein, die in der gezeichneten Ausführung mehrere Mähwerke, insbesondere ein Frontmähwerk 28 sowie zwei seitlich angeordnete Heckmähwerke 29 und 30 umfassen kann. Das Frontmähwerk 28 ist hierbei über eine Dreipunktanlenkung 31 mit einem Oberlenker 32 und zwei Unterlenkern 33 aufgehängt und anhebbar und absenkbar. Die beiden heckseitigen Mähwerke 29 und 30 sind an einem zentralen Rahmen 44 mittels seitlich auskragender, um liegende, in Fahrtrichtung weisende Achsen schwenkbar gelagerte Tragarme 45 gelagert, die über jeweils einen Druckmittelzylinder 46 angehoben und abgesenkt werden können. Die genannten Druckmittelzylinder 46 sind hierbei in an sich bekannter Weise mit der Hydraulik des Schleppers 6 verbunden, an dem die Mähmaschine 27 angebaut ist. Der zuvor genannte Rahmen 44 ist in an sich ebenfalls bekannter Weise über eine Dreipunktanlenkung am Heck des Schleppers angebaut. Weiterhin ist in der gezeichneten Ausführungsform den beiden heckseitigen Mähwerken 29 und 30 jeweils ein Konditionierer und/oder ein Querförderer nachgeordnet, um das gemähte Erntegut konditionieren und/oder mittig in einem gemeinsamen Schwad ablegen zu können.

In der zuvor genannten Weise ist der Mähmaschine 27 wiederum eine Sicherheitsvorrichtung 14 zugeordnet, die eine Erfassungseinrichtung 15 in Form von Bodenabtastsensoren sowie einer Steuervorrichtung 16 zur Ansteuerung von Schnellauslösern der Rückhaltevorrichtungen der Sonder-Energiespeicher 12 umfasst, die den genannten Druckmittelzylindern 46 zum Anheben der Heckmähwerke 29 und 30 und/oder dem als Druckmittelzylinder ausgebildeten Oberlenker 32 der Dreipunktanlenkung 31 für das Frontmähwerk 28 zugeordnet sind. Bei Erfassung eines Hindernisses vor einem der Mähwerke kann durch Lösen der Rückhaltevorrichtungen und schlagartiges Freisetzen der gespeicherten Sonderenergie das Mähwerk entsprechend angehoben werden.

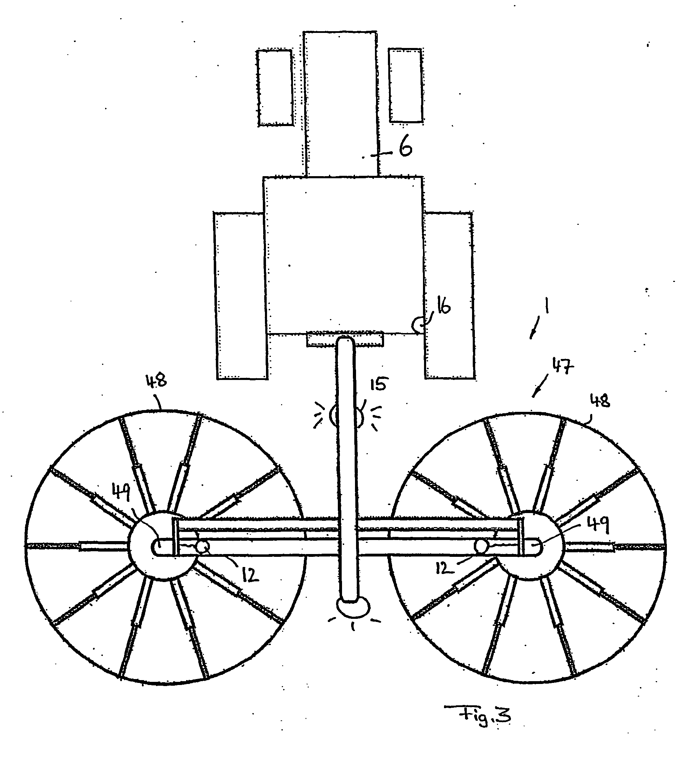

Fig. 3 zeigt gemäß einer weiteren Ausführungsform der Erfindung eine Landmaschine 1 in Form eines Kreiselschwaders 47, der heckseitig an einen Schlepper 6 anbaubar ist und in der gezeichneten Ausführungsform 2 um aufrechte Achsen umlaufende Rechkreisel 48 aufweist. Die genannten Rechkreisel 48 werden über eine Zapfwelle vom Schlepper 6 her angetrieben, wobei die Antriebsbewegung der Gelenkwelle über geeignete Rechkreiselgetriebe 49 in die Antriebsbewegung der Rechkreisel 48 umgesetzt wird. Den Rechkreiseln 48 ist dabei wiederum eine Sicherheitsvorrichtung 14 zugeordnet, die Sonder-Energiespeicher 12 des zuvor beschriebenen Typs umfasst. Diese Sonder-Energiespeicher 12 sind hierbei den Rechkreiselgetrieben 49 zugeordnet derart, dass der von den Sonder-Energiespeichern 12 bereitstellbare Impuls ein Kupplungsteil und/oder ein Getriebeteil beispielsweise in Form eines Zahnrads absprengen bzw. in sonstiger Weise wegbewegen kann, um den Antriebsstrang zu unterbrechen und die Rechkreisel sozusagen freizuschalten. Die Sicherheitsvorrichtung 14 kann ähnlich den zuvor beschriebenen Ausführungen eine entsprechende Erfassungsvorrichtung 15 und eine Steuervorrichtung 16 aufweisen, um die Rückhaltevorrichtungen der Sonder-Energiespeicher 12 beispielsweise bei Annäherung einer Person an den Arbeitsbereich der Rechkreisel zu lösen.

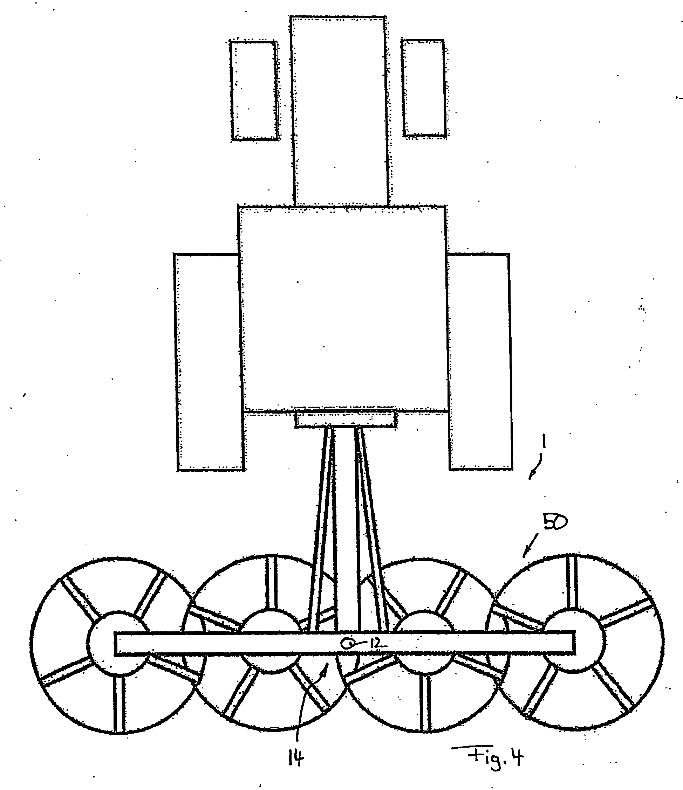

Wie Fig. 4 zeigt, kann die Landmaschine 1 auch in Form eines Kreiselheuers 50 ausgebildet sein, wobei auch hier eine Sicherheitsvorrichtung 14 umfassend einen Sonder-Energiespeicher 12 der genannten Art vorgesehen ist. Der Sonder-Energiespeicher 12 kann in der eingangs beschriebenen Weise zur Bewirkung verschiedener Funktionen vorgesehen sein.

## Patentansprüche

1. Landmaschine in Form eines an einen Schlepper (6) anbaubaren Grünland- und/oder Bodenbearbeitungsgeräts mit einer Sicherheits- und/oder Schnellschaltvorrichtung (14) zum Anheben, Wegbewegen, Stoppen, Bremsen, Abkuppeln und/oder Freischalten eines sicherheits- und/oder kollisionsrelevanten Maschinenteils (8; 28, 29, 30; 48) und/oder zur Verhinderung einer Überlastung, wobei die Sicherheits- und/oder Schnellschaltvorrichtung (14) einen Aktor (10; 32; 46) zur Beaufschlagung des genannten Maschinenteils aufweist, der einen Sonder-Energiespeicher (12) mit einer im Arbeitsbetrieb der Landmaschine geschlossenen Rückhaltevorrichtung aufweist, wobei die Sicherheits- und/oder Schnellschaltvorrichtung (14) einen NotfallAuslöser zum automatischen Öffnen der Rückhaltevorrichtung bei Auftreten eines Notfalls und/oder einer anderen, eine Schnellschaltung benötigenden Sondersituation aufweist, **dadurch gekennzeichnet, dass** der Sonder-Energiespeicher (12) einen Gasgenerator (120) mit einer Zündpille (19) zur Freisetzung einer in einem Gasdruckspeicher (18) gespeicherten Gasmenge aufweist, wobei der Gasgenerator (120) den Notfall-Auslöser zum Auslösen der Rückhaltevorrichtung bildet.

2. Landmaschine nach dem vorhergehenden Anspruch, wobei der Sonder-Energiespeicher (12) einen Flüssigkeits-Hochdruckspeicher, insbesondere einen Hydraulik-Hochdruckspeicher umfaßt.

3. Landmaschine nach einem der vorhergehenden Ansprüche, wobei der Sonder-Energiespeicher (12) einen mechanischen Energiespeicher, insbesondere eine vorgespannten Federvorrichtung, umfaßt.

4. Landmaschine nach einem der vorhergehenden Ansprüche, wobei die Sicherheits- und/oder Schnellschaltvorrichtung (14) eine Erfassungsvorrichtung (15) zur Erfassung von in einen Kollisionsbereich geratenden Hindernissen und/oder Personen sowie eine Steuervorrichtung (16) zur vorzugweise elektrischen Betätigung des Notfall-Auslösers in Abhängigkeit der Erfassung eines Hindernisses und/oder einer Person aufweist.

5. Landmaschine nach einem der vorhergehenden Ansprüche, wobei der Aktor der Sicherheits- und/oder Schnellschaltvorrichtung (14) einen Druckmittelzylinder (10; 46) umfasst, der eine mit dem Sonder-Energiespeicher (12) über den Notfall-Auslöser verbindbare Druckmittelkammer aufweist.

6. Landmaschine nach dem vorhergehenden Anspruch, wobei der Druckmittelzylinder (10; 46) zusätzlich zu dem Sonder-Energiespeicher (12) mit einer vorzugsweise steuerbaren Druckmittelquelle, insbesondere der Druckmittelquelle eines Schleppers (6), zur mehrmaligen Betätigung verbindbar ist.

7. Landmaschine nach einem der vorhergehenden Ansprüche, wobei der Aktor ein Trennelement zum Durchtrennen eines Antriebsstrangs aufweist, das von dem Gasgenerator (120) beaufschlagbar und auslösbar ist.

8. Landmaschine nach einem der vorhergehenden Ansprüche, wobei die Sicherheits- und/oder Schnellschaltvorrichtung (14) eine Bewegungsvorrichtung, insbesondere eine Hubvorrichtung (9), zum Wegbewegen des genannten Maschinenteils (8; 28, 29, 30) aufweist, die ein mit dem Sonder-Energiespeicher (12) verbindbares Stellelement (10, 46), vorzugsweise einen Druckmittelzylinder (10; 46) aufweist.

9. Landmaschine nach dem vorhergehenden Anspruch, wobei die Bewegungsvorrichtung eine Dreipunktaufhängung (31) mit Ober- und Unterlenkern (32, 33) aufweist, von denen zumindest einem das mit dem Sonder-Energiespeicher (12) verbindbare Stellelement zugeordnet ist.

10. Landmaschine nach einem der beiden vorhergehenden Ansprüche, wobei die Bewegungsvorrichtung zusätzlich zu dem Sonder-Energiespeicher (12) mit einer vorzugsweise steuerbaren Druckmittelquelle zur mehrmaligen Betätigung der Bewegungsvorrichtung verbindbar ist.

11. Landmaschine nach einem der vorhergehenden Ansprüche, wobei die Sicherheits- und/oder Schnellschaltvorrichtung (14) eine Bremsvorrichtung zum Abbremsen und/oder Anhalten eines beweglichen, vorzugsweise antreibbaren Maschinenteils aufweist, die einen mit dem Sonder-Energiespeicher (12) verbindbaren Bremsaktor aufweist.

12. Landmaschine nach einem der vorhergehenden Ansprüche, wobei die Sicherheits- und/oder Schnellschaltvorrichtung (14) eine Auskuppelvorrichtung zum Auskuppeln eines antreibbaren Maschinenteils aufweist, die ein von dem Sonder-Energiespeicher (12) betätigbares Kupplungselement aufweist.

## Claims

1. An agricultural machine, in particular in the form of a grassland cultivation device and/or soil cultivation device attachable to a tractor (6) and having a safety and/or quick-switch apparatus (14) for lifting, moving away, stopping, braking, uncoupling and/or disconnecting a safety and/or collision relevant machine part (8; 28, 29, 30; 48) and/or for preventing an overload, wherein the safety and/or quick switch apparatus (14) has an actuator (10; 32; 46) for acting on the named machine part, said actuator having a special energy store (12) with a retention device closed in working operation of the agricultural machine, wherein the safety and/or quick-switch apparatus (14) has an emergency trigger for the automatic opening of the retention device on the occurrence of an emergency and/or of another special situation requiring a quick switching, **characterised in that** the special energy store (12) has a gas generator (120) having an ignition tablet (19) for releasing a gas quantity stored in a gas pressure store (18), with the gas generator (120) forming the emergency trigger for triggering the retention apparatus.

2. An agricultural machine in accordance with the preceding claim, wherein the special energy store (12) includes a liquid high-pressure store, in particular a hydraulic high-pressure store.

3. An agricultural machine in accordance with one of the preceding claims, wherein the special energy store (12) includes a mechanical energy store, in particular a biased spring apparatus.

4. An agricultural machine in accordance with one of the preceding claims, wherein the safety and/or quick switch apparatus (14) has a detection apparatus (15) for detecting obstacles and/or persons entering into a collision zone as well as a control apparatus (16) for the preferably electrical actuation of the emergency trigger in dependence on the detection of an obstacle and/or of a person.

5. An agricultural machine in accordance with one of the preceding claims, wherein the actuator of the safety and/or quick switch apparatus (14) has a pressure medium cylinder (10; 46) which has a pressure medium chamber connectable to the special energy store (12) via the emergency trigger.

6. An agricultural machine in accordance with the previous claim, wherein the pressure medium cylinder (10; 46)) can be connected, in addition to the special energy store (12), to a preferably controllable pressure medium source, in particular the pressure medium source of a tractor (6), for multiple actuation.

7. An agricultural machine in accordance with one of the preceding claims, wherein the actuator has a separating element for separating a drive train which can be acted on and triggered by the gas generator (120).

8. An agricultural machine in accordance with one of the preceding claims, wherein the safety and/or quick switch apparatus (14) has a movement apparatus, in particular a lifting apparatus (9), for moving away the named machine part (8; 28, 29, 30), said movement apparatus having an adjustment element (10, 46), preferably a pressure medium cylinder (10; 46) connectable to the special energy store (12).

9. An agricultural machine in accordance with the preceding claim, wherein the movement apparatus has a three-point suspension (31) having upper and lower steering arms (32, 33) of which at least one is associated with an adjustment element connectable to the special energy store (12).

10. An agricultural machine in accordance with either of the two preceding claims, wherein the movement apparatus can be connected, in addition to the special energy store (12), to a preferably controllable pressure medium source for multiple actuation of the movement apparatus.

11. An agricultural machine in accordance with one of the preceding claims, wherein the safety and/or quick switching apparatus (14) has a braking apparatus for braking and/or stopping a movable, preferably drivable, machine part, said braking apparatus having a brake actuator connectable to the special energy store (12).

12. An agricultural machine in accordance with one of the preceding claims, wherein the safety and/or quick switch apparatus (14) has an uncoupling apparatus for uncoupling a drivable machine part, said uncoupling apparatus having a coupling element actuable by the special energy store (12).

## Revendications

1. Machine agricole sous la forme d'un outil à herbage et/ou d'un outil de préparation du sol attelable à un tracteur (6) avec un dispositif de sécurité et/ou de mise au point instantanée (14) destiné au levage, au déplacement, à l'arrêt, au désaccouplement et/ou à la déconnexion d'un élément de machine pertinent pour la sécurité et/ou en cas de collision (8 ; 28, 29, 30 ; 48) et/ou pour éviter une surcharge, le dispositif de sécurité et/ou de mise au point instantanée (14) présentant un acteur (10 ; 32 ; 46) destiné à l'alimentation dudit élément de machine, qui présente un accumulateur d'énergie spécial (12) avec un dispositif de retenue fermé au mode de travail de la machine agricole, le dispositif de sécurité et/ou de mise au point instantanée (14) présentant un déclencheur d'urgence destiné à ouvrir automatiquement le dispositif de retenue en cas de survenue d'un cas d'urgence et/ou d'une autre situation spécifique nécessitant une action instantanée, **caractérisée en ce que** l'accumulateur d'énergie spécial (12) présente un générateur de gaz (120) avec une amorce (19) destinée à libérer une quantité de gaz stockée dans un réservoir de gaz sous pression (18), le générateur de gaz (120) constituant le déclencheur d'urgence pour déclencher le dispositif de retenue.

2. Machine agricole selon la revendication précédente, l'accumulateur d'énergie spécial (12) comprenant un réservoir haute pression de liquide, notamment un réservoir haute pression hydraulique.

3. Machine agricole selon une quelconque des revendications précédentes, l'accumulateur d'énergie spécial (12) comprenant un accumulateur d'énergie mécanique, notamment un dispositif à ressort prétendu.

4. Machine agricole selon une quelconque des revendications précédentes, le dispositif de sécurité et/ou de mise au point instantanée (14) présentant un dispositif de détection (15) destiné à la détection d'obstacles et/ou de personnes parvenant dans une zone de collision ainsi qu'un dispositif de commande (16) destiné à l'actionnement de préférence électrique du déclencheur d'urgence en fonction de la détection d'un obstacle et/ou d'une personne.

5. Machine agricole selon une quelconque des revendications précédentes, l'acteur du dispositif de sécurité et/ou de mise au point instantanée (14) comprenant un cylindre à moyen de pression (10 ; 46), qui présente une chambre à moyen de pression raccordable avec l'accumulateur d'énergie spécial (12) par le déclencheur d'urgence.

6. Machine agricole selon la revendication précédente, le cylindre à moyen de pression (10 ; 46) étant raccordable pour l'actionnement répété de manière supplémentaire à l'accumulateur d'énergie spécial (12) par une source de moyen de pression de préférence gouvernable, notamment par la source de moyen de pression d'un tracteur (6).

7. Machine agricole selon une quelconque des revendications précédentes, l'acteur présentant un élément de séparation destiné à sectionner une corde d'entraînement, qui est alimentable et déclenchable par le générateur de gaz (120).

8. Machine agricole selon une quelconque des revendications précédentes, le dispositif de sécurité et/ou de mise au point instantanée (14) présentant un mécanisme de mouvement, notamment un dispositif de levage (9), destiné au déplacement dudit élément de machine (8 ; 28, 29, 30), qui présente un élément de réglage (10 ; 46) raccordable à l'accumulateur d'énergie spécial (12), de préférence un cylindre à moyen de pression (10 ; 46).

9. Machine agricole selon la revendication précédente, le mécanisme de mouvement présentant une suspension à trois points (31) avec des barres conductrices supérieure et inférieure (32, 33), dont au moins une est celle à laquelle l'élément de réglage raccordable avec l'accumulateur d'énergie spécial (12) est affecté.

10. Machine agricole selon une quelconque des deux revendications précédentes, le mécanisme de mouvement, de manière supplémentaire à l'accumulateur d'énergie spécial (12), étant raccordable avec une source de moyen de pression gouvernable de préférence pour l'actionnement répété du mécanisme de mouvement.

11. Machine agricole selon une quelconque des revendications précédentes, le dispositif de sécurité et/ou de mise au point instantanée (14) présentant un dispositif de freinage destiné à freiner et/ou arrêter un élément de machine mobile, de préférence entraînable, et qui présente un acteur de freinage raccordable avec l'accumulateur d'énergie spécial (12).

12. Machine agricole selon une quelconque des revendications précédentes, le dispositif de sécurité et/ou de mise au point instantanée (14) présentant un dispositif de désaccouplement destiné à désaccoupler un élément de machine entraînable, qui présente un élément d'accouplement actionnable par l'accumulateur d'énergie spécial (12).
